Europäisches Patentamt

European Patent Office

Office européen des brevets

(19)

(11) **EP 1 536 029 A1**

(12) **EUROPEAN PATENT APPLICATION**
published in accordance with Art. 158(3) EPC

(43) Date of publication:
**01.06.2005 Bulletin 2005/22**

(21) Application number: **03741292.1**

(22) Date of filing: **09.07.2003**

(51) Int Cl.[7]: **C22C 38/00**, C22C 38/58,
F16L 19/08, F16K 27/00

(86) International application number:
**PCT/JP2003/008695**

(87) International publication number:
**WO 2004/005568 (15.01.2004 Gazette 2004/03)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **09.07.2002 JP 2002199901**

(71) Applicant: **Fujikin Incorporated
Osaka-shi, Osaka-fu 550-0012 (JP)**

(72) Inventors:
• **Matsuhashi, Ryo, c/o Nippon Steel Corp.,
Futtsu-shi, Chiba 293-0011 (JP)**
• **Suetsugu, Kazuhiro, c/o Nippon Steel Corp.
Chiyoda-ku, Tokyo 100-0004 (JP)**
• **Miyagawa, Hideyuki, c/o Fujikin Inc.
Osaka-shi, Osaka 550-0012 (JP)**
• **Kita, Toshio, c/o Fujikin Inco.,
Osaka-shi, Osaka 550-0012 (JP)**

• **Sogabe, Kyota, c/o Fujikin Inc.
Osaka-shi, Osaka 550-0012 (JP)**
• **Yoshikawa, Kazuhiro, c/o Fujikin Inc.
Osaka-shi, Osaka 550-0012 (JP)**
• **Morimoto, Akihiro, c/o Fujikin Inc.
Osaka-shi, Osaka 550-0012 (JP)**
• **Sato, Jyunji, c/o Fujikin Inc
Osaka-shi, Osaka 550-0012 (JP)**
• **Daido, Kunihiko, c/o Fujikin Inc.
Osaka-shi, Osaka 550-0012 (JP)**
• **Akamoto, Hisatoshi, c/o Fujikin Inc.
Osaka-shi, Osaka 550-0012 (JP)**
• **Kimura, Yoshiki, c/o Fujikin Inc
Osaka-shi, Osaka 550-0012 (JP)**

(74) Representative: **Paul, Dieter-Alfred, Dipl.-Ing. et al
Patentanwalt,
Hellersbergstrasse 18
41460 Neuss (DE)**

(54) **PARTS FOR FLUID**

(57) A specified metal member included among the components of a valve, coupling or like fluid handling part for use in piping and fluid control devices is made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities, the alloy having a CRI (crevice corrosion resistance index) value in the range of 40 ≤ CRI ≤ 55, as determined from the expression CRI = [Cr] + 4 × [Mo] + 30 × [N] wherein the amount of alloy components present in combination in the alloy to ensure crevice corrosion resistance are expressed in %by weight.

Fig. 2

**EP 1 536 029 A1**

**Description**

TECHNICAL FIELD

The present invention relates to fluid handling parts, such as couplings for use in piping systems and valves or like fluid control devices for use in fluid control apparatus, and more particularly to fluid handling parts suitable for use in apparatus for manufacturing pharmaceuticals or foods.

BACKGROUND ART

Couplings, valves, and the like (to be referred to collectively as "fluid handing parts") are generally used as parts for universal use in fluid control apparatus and various piping systems.
For example, reactors for use in manufacturing chemicals or foods and tanks or the like for use in storing or transporting chemicals or foods are provided with metal valves for feeding, transporting or delivering the material or product. Carbon steel, low alloy steel, stainless steel, Ni-base alloy, titanium, Ni/Cu alloy or the like is selectively used for metal valves depending on the components, purity and temperature of the chemical or food. SUS304 steel, SUS316L steel or like stainless steel, which is generally considered to be highly resistant to corrosion, is widely used especially for metal valves for use in manufacturing, storing or transporting materials and products of various chemicals or foods. However, many of corrosion defects or faults caused to metal valves are almost all attributable to crevice corrosion due to chloride ions contained in chemicals or foods. Further in many cases, it is common practice to sterilize or wash with water the interior of valves for maintenance to prevent the development or growth of crevice corrosion of the valve or microorganisms therein, but if the step of washing or sterilization and the step of drying are imperfect, chloride ions frequently remain on the inner surfaces of the valve or in crevices in the structure thereof. Accordingly, the flange as tightened up on the valve body or the packing portion of the body is susceptible to crevice corrosion, consequently necessitating much time and labor for repairs and permitting metal ions released by crevice corrosion to degrade the quality of the product, hence a very serious problem.
If an attempt is made to improve the corrosion resistance of SUS316 members so as not to give rise to the problem of corrosion when they are used in food or pharmaceutical manufacturing apparatus wherein solutions of high salt concentration are used, another problem arises anew such as a reduction in strength or in hardness, so that it has been nearly impossible to ameliorate the crevice corrosion resistance only of conventional fluid handling parts conforming to the required specifications while permitting the part to retain the other characteristics.
An object of the present invention is to provide a fluid handling part which is improved in crevice corrosion resistance while retaining the other properties.

DISCLOSURE OF THE INVENTION

The present invention provides a fluid handling part which is free of the foregoing problems. From the above viewpoint, we have conducted research on the environment for chemicals and foods to which valves, couplings and like fluid handling parts are exposed to develop crevice corrosion and consequently found that crevice corrosion damage or faults are attributable in many cases to the presence of no small amounts of chloride ions in chemicals and foods. We have further found that the corrosive environment for use in evaluating crevice corrosion can be simulated by a seawater environment, and tested various stainless steel valves for exposure in natural seawater in view of the above findings. More specifically, natural seawater having the normal temperature was continuously passed through valves for about six months to check the valves for corrosion and determine whether the exposure to seawater caused crevice corrosion faults. Thus, we have conducted intensive research and identified specific fluid channel opening-closing and fluid control valves for use in manufacturing, storage and transport, and specific pipe couplings for use in manufacturing, storage and transport to accomplish the present invention. To sum up, the present invention has the following features.
The invention provides a valve, coupling or like fluid handling part for use in piping and fluid control devices which is composed of a plurality of components, the plurality of components including a specified metal member having a contact surface to be brought into contact with one of the other components, the contact surface having an end exposed on an exterior of the fluid handling part, the fluid handling part being characterized in that the metal member is made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities, the alloy having a CRI (crevice corrosion resistance index) value in the range of $40 \leq CRI \leq 55$, as determined from the expression:

$$CRI = [Cr] + 4 \times [Mo] + 30 \times [N]$$

wherein the amounts of alloy components present in combination in the alloy to ensure crevice corrosion resistance are expressed in % by weight.

Preferably, the alloy further comprises up to 2% of W and/or up to 2% of V.

The fluid handling part of the invention is composed of a plurality of components which include a specified metal member having a contact surface to be brought into contact with one of the other components, the contact surface having an end exposed on the exterior of the fluid handling part. The specified metal member, i.e., the member susceptible to crevice corrosion, is made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities. The alloy has a CRI value in the range of $40 \leq CRI \leq 55$, as calculated from the expression $CRI = [Cr] + 4 \times [Mo] + 30 \times [N]$ wherein the amounts of alloy components present in combination in the alloy to ensure crevice corrosion resistance are expressed in % by weight. Accordingly, the part can be improved in crevice corrosion resistance without entailing a reduction in strength and in hardness which has been a disadvantage resulting from the improvement in crevice corrosion resistance.

The metal member is preferably up to 1, more preferably up to 0.2, in surface roughness Ra.

Although couplings, valves, etc. are exemplified as fluid handling parts, these examples are not limitative; the invention can be embodied also as various other parts.

For example, the fluid handling part is a valve comprising a body, an actuator and a threaded member, and at least one of the body, the actuator and the threaded member is the specified metal member (made of the above alloy). Alternatively the fluid handling part is a diaphragm valve wherein a nonmetallic diaphragm is held between a metal body and a metal bonnet, and each of the body and the bonnet is the specified metal member (made of the above alloy). In the latter case, the portion where the diaphragm is held between the body and the bonnet is very susceptible to crevice corrosion. By giving improved crevice corrosion resistance to the portion, remarkably improved durability can be given to the diaphragm valve in its entirety.

Further alternatively, the fluid handling part is a pipe coupling to be assembled by tightening up a cap nut as screwed on an externally threaded portion provided on an outer periphery of a tubular coupling member, and at least one of the coupling member and the cap nut is the specified metal member (made of the alloy).

BRIEF DESCRIPTION OF THE DRAWINGS

FIG. 1 is a sectional view showing a valve as a first embodiment of fluid handling part of the invention.
FIG. 2 is a sectional view showing a diaphragm value in a channel closing state, as a second embodiment of fluid handling part of the invention.
FIG. 3 is a view in vertical section showing the valve of FIG. 2 in a channel opening state.
FIG. 4 is an exploded view in longitudinal section showing a pipe coupling as a third embodiment of fluid handling part of the invention.
FIG. 5 is a view in longitudinal section showing the pipe coupling of FIG. 4 as assembled.
FIG. 6 is an exploded view in vertical section showing a pipe coupling as a fourth embodiment of fluid handling part of the invention.

BEST MODE OF CARRYING OUT THE INVENTION

Embodiments of the present invention will be described below with reference to the drawings. However, the invention is not limited to the drawings showing the embodiments.

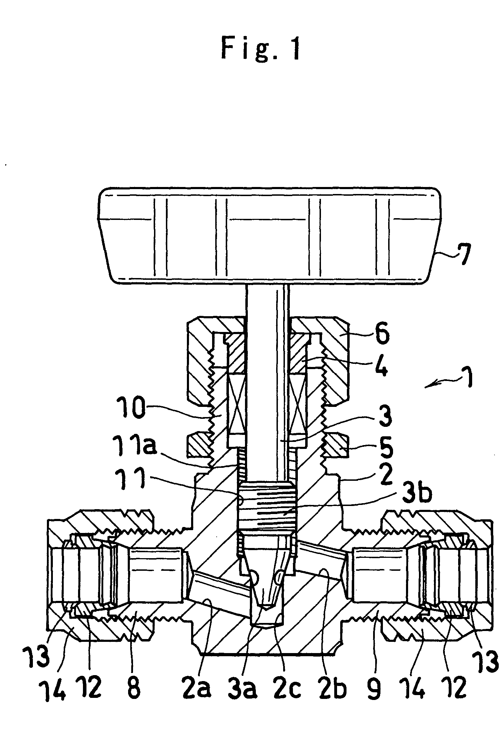

FIG. 1 shows a first embodiment of fluid handling part of the invention. In the description of the first embodiment, the left- and right-hand sides of the drawing will be referred to as "left" and "right," respectively.

The fluid handling part of this embodiment is a needle stop valve, which comprises a bottomed-hollow cylindrical body 2 provided at a lower portion thereof with a tubular leftward projection 8 and a tubular rightward projection 9, a solid cylindrical stem 3 inserted in the body 2 upwardly and downwardly movably, a hollow cylindrical guide 4 fitted in an upper portion of the body 2 for guiding the upward and downward movement of the stem 3, a panel nut 5 screwed on the lower end of an externally threaded portion 10 formed on the outer periphery of upper part of the body 2, a cap nut 6 screwed on the top part of the threaded portion 10, and a handle 7 provided on the upper end of the stem 3.

The stem 3, guide 4, cap nut 6 and handle 7 constitute an actuator of the fluid handling part 1.

The body 2 is provided at the lower portion thereof with a fluid inlet channel 2a extending from a position close to the center of the body slightly upwardly leftward and communicating with an inside channel of the leftward projection 8, a fluid outlet channel 2b extending from a position above the end, toward the center, of the inlet channel 2a slightly downwardly rightward and communicating with an inside channel of the rightward projection 9, and a communication channel 2c extending vertically to hold the two channels 2a, 2b in communication. The communication channel 2c is stepped to give a smaller diameter to the lower portion thereof than to the upper portion thereof. The body 2 has an inner peripheral surface positioned above the communication channel 2c and defining a stem guide passage 11 extending vertically. The stem guide passage 11 has an internally threaded lower portion 11a slightly extending into the communication channel 2c. The guide passage 11 has an upper portion having a larger diameter than the threaded portion 11a and having the hollow cylindrical guide 4 fitted therein.

The stem 23 has a conical lower end portion 3a tapered toward an extremity thereof, and an externally threaded portion 3b positioned above the conical portion 3a, having a larger diameter than the other portion and screwed in the internally threaded portion 11a of the body 2.

The guide 4 bears on a stepped portion at the upper end of the internally threaded portion 11a so as to cause the upper end of the guide to project beyond the upper end face of the body. The top wall of the cap nut 6 has a through hole for an upper end portion of the stem 3 to extend therethrough. The cap nut 6 is screwed on the externally threaded portion 10 of the body 2, whereby the guide 4 is fixed to the body 2. The upper end of the stem 3 extends upward beyond the cap nut 6 and has the handle 7 attached thereto.

The leftward projection 8 and the rightward projection 9 both tubular and positioned at the lower portion of the body 2 are each provided with a pipe coupling portion. Each of the projections 8, 9 is provided with a front ring 12 and a back ring 13 which are fitted around a pipe projecting from the projection, and with a cap nut 14 for tightening up the rings 12, 13 to fix the pipe to the projection 8 (9).

As to the materials of the members 2, 3, 4, 5, 6, 7, the guide 4 is made of PTFE and PFA, the handle 7 is made of ADC12, and the body 2, stem 3, panel nut 5 and cap nut 6 are made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Gr, 15 to 25% of Ni, 4.5 to 7.0% of Mo, 0.5 to 3.0% of Cu, 0.1 to 0.3% of N, and the balance substantially Fe and other inevitable impurities. The alloy has a CRI value in the range of $40 \leq CRI \leq 55$, as calcularted from the expression $CRI = [Cr] + 4 \times [Mo] + 30 \times [N]$ wherein the amounts of alloy components present in combination in the alloy to ensure crevice corrosion resistance are expressed in % by weight.

The portions where the body 2 is in contact with the ends of the nuts 5, 6, and the portion where the stem 3 is in contact with the hole-defining inner periphery of the top wall of the cap nut 6 are susceptible to crevice corrosion. The metal members 2, 3, 5, 6, which are prone to crevice corrosion while in use, are made of the alloy described above. Furthermore, the contact portions of the metal members 2, 3, 5, 6 are finished to a surface roughness of about 0.1 in Ra. The surface roughness and the use of the stainless steel of the above composition produce a synergistic effect to give further improved crevice corrosion resistance.

It is also desirable to use the above alloy for the back ring 13 and the cap nut 14 of the pipe coupling provided on each of the tubular leftward and rightward projections 8, 9 at the lower portion of the body 2 to ensure improved crevice corrosion resistance.

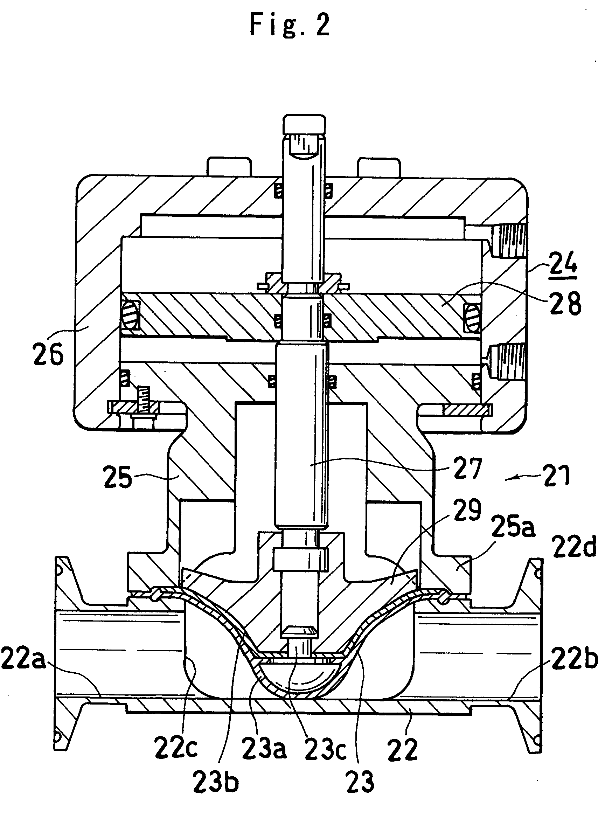

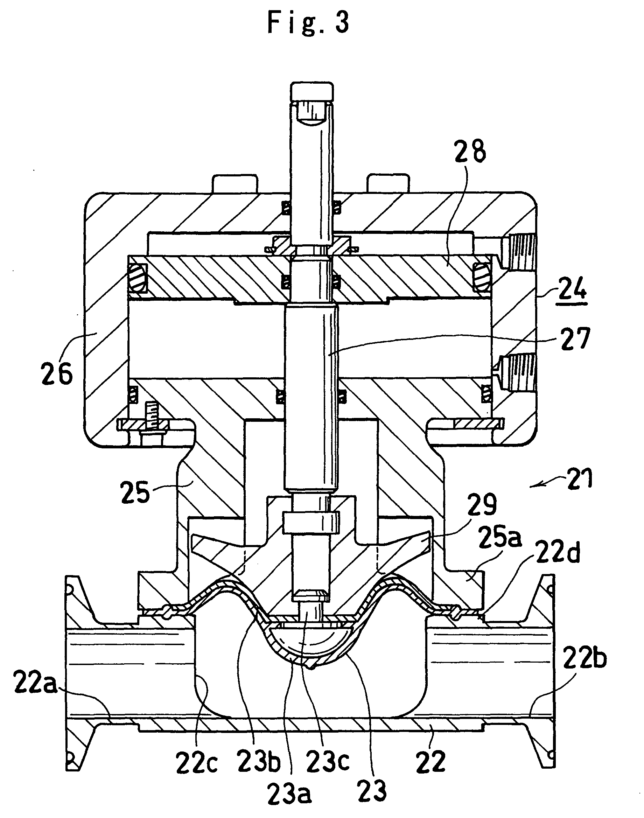

FIGS. 2 and 3 show a second embodiment of fluid handling part of the invention. FIG. 2 shows the part in a channel closing state, and FIG. 3 the same in a channel opening state.

The fluid handling part 21 of this embodiment is a diaphragm valve, which comprises a body 22 having a fluid inlet channel 22a and a fluid outlet channel 22b, a diaphragm 23 for opening or closing the channels 22a, 22b of the body 22, and an actuator 24 for moving the diaphragm 23 to an opening position or to a closing position.

The body 22 has at its center a circular cavity 22c facing upward. The inlet channel 22a and the outlet channel 22b have respective inner ends which are opened to this cavity 22c.

The diaphragm 23 comprises a square diaphragm 23a having embedded therein one end of a suspending member 23c, and a circular diaphragm 23b provided in intimate contact with the upper surface of the square diaphragm 23a. The diaphragm 23 is so shaped as to project downward at its center. In the channel closing state shown in FIG. 2, the diaphragm central portion is in bearing contact with the bottom surface of the body 22 defining the cavity 22c to thereby close a channel extending from the inlet channel 22a to the outlet channel 22b. The cavity side of the body 22 has no projection (wear portion), and the inside channel of the body 22 extends straight.

The actuator 24 comprises a bonnet 25 in the form of a hollow cylinder having a top wall, a casing 26 provided over the top wall of the bonnet 25, a stem 27 having a lower end connected to the suspending member 23c and an upper end projecting upward beyond the casing 26, a piston 28 disposed inside the casing 26 upwardly or downwardly movably and secured to an intermediate portion of the stem 27, and a diaphragm holder 29 provided at the lower end portion of the stem 27. The body 22, the diaphragm 23 and the actuator 24 are fitted to one another so that the outer edge portion of the square diaphragm 23a of the diaphragm 23 is held between a flange portion 25a of the bonnet 25 and an opening edge portion 22d of the body 22. The members 22 to 24 are fastened together with unillustrated screw members to assemble the diaphragm valve 21.

When compressed air is introduced into the casing 26 below the piston 28 in the channel closing state shown in FIG. 2, the piston 28 and the stem 27 move upward, and the diaphragm 23 positioned in the cavity 22c of the body 22 also moves upward to bring the valve into the channel opening state as shown in FIG. 3, whereby a straight channel having no portion permitting stagnation of fluid and extending from the inlet channel 22a to the outlet channel 22b is formed inside the body 22. In the channel opening state, the diaphragm 23 is elastically deformed so that an upwardly projecting annular ridge is formed between the central portion thereof and the diaphragm outer edge portion held between the flange portion 25a of the bonnet 25 and the opening edge portion 22d of the body.

As to the materials of the members 22, 23, 25, 26, 27, 28, the piston 28 is made of SUSF316L, the square diaphragm 23a is made of PTFE, the circular diaphragm 23b is made of butyl rubber, and the body 22, bonnet 25, casing 26 and stem 27 are made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities. The alloy has a CRI value in the range of $40 \leq CRI \leq 55$, as determined from the expression $CRI = [Cr] + 4 \times [Mo] + 30 \times [N]$ wherein the amount of alloy components present in combination in the alloy to ensure crevice corrosion resistance are expressed in % by weight.

The butt joint between the body 22 and the bonnet 25 with the diaphragm 23 interposed therebetween, the joint between the bonnet 25 and the casing 26, and the portion of contact between the stem 27 and the top wall inner periphery of the casing 26 defining a through hole are susceptible to crevice corrosion, so that the metal members 22, 25, 26, 27, which are prone to crevice corrosion while in use, are made of the alloy described above. Furthermore, the contact portions of the metal members 22, 25, 26, 27 are finished to a surface roughness of about 0.1 in Ra. The surface roughness and the use of the stainless steel of the above composition produce a synergistic effect to give further improved crevice corrosion resistance.

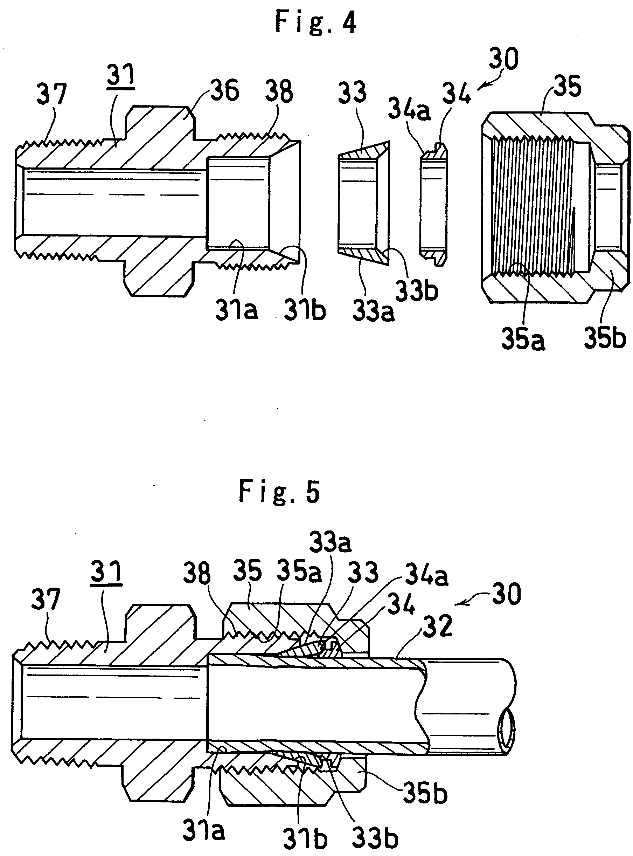

FIGS. 4 and 5 show a third embodiments of fluid handling part of the invention. In the description of the third embodiment, the left- and right-hand sides of the drawing will be referred to as "front" and "rear," respectively.

The fluid handling part 30 of this embodiment is a pipe coupling, which comprises a tubular body (coupling member) 31 for a pipe 32 to be inserted in through the rear end thereof, a front ring 33 and a back ring 34 which are to be fitted around the pipe 32 projecting from the rear end of the body 31, and a cap nut 35 for tightening up the front and back rings 33, 34 to fix the pipe 32 to the body 31.

The body 31 has an outer flange 36 formed around the outer periphery of an intermediate portion thereof and externally threaded portions 37, 38 respectively at front and rear end portions thereof. The inner periphery of the body 31 has a large-diameter rear-end portion 31a slightly larger than the front portion of the body inner periphery. The body 31 has a tapered face 31b formed on the inner periphery of its rear end and tapered toward the front.

The cap nut 35 is provided at the front-end side thereof with an internally threaded portion 35a, which is screwed on the externally threaded rear-end portion 38 of the body 31. The cap nut 35 has an inner flange 35b at the rear end thereof.

The front ring 33 is provided on its outer periphery with a tapered face 33a shaped in conformity with the shape of the tapered face 31b at the rear end of the body 31. The front ring 33 has an annular recess 33b formed at the inner periphery of its rear end and tapered toward the front. The back ring 34 is provided at its front end with an annular projection 34a tapered toward the front and fittable into the recess 33b of the front ring 33.

When the cap nut 35 of the pipe coupling 30 is tightened, the front face of the inner flange 35b of the cap nut 35 comes into bearing contact with the rear face of the back ring 34, advancing the back ring 34, whereby the projection 34a of the back ring 34 is fitted into the recess 33b of the front ring 33. The front ring 33 is moved forward along with the back ring 34 and has its front end brought into contact with the tapered face 31b of the body 31. When the cap nut 35 is further tightened up, the respective front ends of the front ring and the back ring 34 are deformed inward, caused to bite into the pipe 31 and firmly pressed against the pipe 32.

As to the materials of the members 31, 33, 34, 35, front ring 33 is made of SUS316, and the body 31, back ring 34 and cap nut 35 are made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities. The alloy has a CRI value in the range of $40 \leq CRI \leq 55$, as calculated from the expression $CRI = [Cr] + 4 \times [Mo] + 30 \times [N]$ wherein the amount of alloy components present in combination in the alloy to ensure crevice corrosion resistance are expressed in % by weight.

The portion of screw-thread engagement between the body 31 and the cap nut 35 and the portion of contact between the cap nut 35 and the back ring 34 are susceptible to crevice corrosion, so that the metal members 31, 34, 35, which are prone to crevice corrosion while in use, are made of the alloy described.

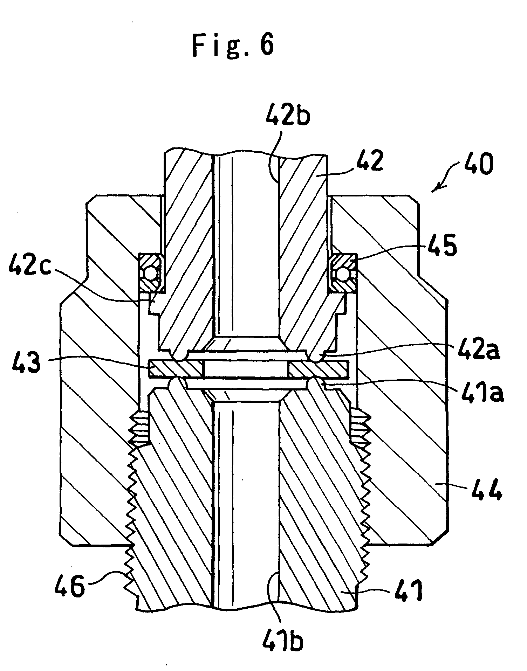

FIG. 6 shows a fourth embodiment of fluid handling part of the invention.

The fluid handling part 40 of this embodiment is a pipe joint, which comprises first and second tubular coupling members 41, 42 having respective fluid channels 41b, 42b in communication with each other, a gasket 43 interposed between butting end faces of the two coupling members 41, 42, and threaded means for connecting the two coupling members 41, 42 together. The first and second coupling members 41, 42 have respective annular ridges 41a, 42a formed on their butting end faces. The second coupling member 42 has a flange 42c close to the end thereof. The threaded means comprises an externally threaded portion 46 provided on the first coupling member 41, and a cap nut 44 fitting around the second coupling member 42 and screwed on the externally threaded portion 46 of the first coupling member 41 so that the inner surface of a top wall of the nut is pressed against the flange 42c with a thrust ring 45 interposed therebetween.

With this pipe coupling 40, the cap nut 44 screwed on the first coupling member 41, when tightened up, deforms the gasket 43, whereby a proper sealing force is available.

As to the materials for the members 41, 42, 43, 44, the gasket 43 is made of SUS316, and the first coupling member 41, second coupling member 42 and cap nut 44 are made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities. The alloy has a CRI value in the range of $40 \leq CRI \leq 55$, as determined from the expression CRI = $[Cr] + 4 \times [Mo] + 30 \times [N]$ wherein the amount of alloy components present in combination in the alloy to ensure crevice corrosion resistance are expressed in % by weight.

The portion of screw-thread engagement between the first coupling member 41 and the cap nut 44 and the portion of contact between the second coupling member 42 and the inner periphery of the cap nut (44) top wall defining a through bore are susceptible to crevice corrosion, so that the metal members 41, 42, 44, which are prone to crevice corrosion when in use, are made of the alloy described.

The present invention gives high durability to fluid handling parts for use in manufacturing, storing or transporting chemicals or foods against the damage or faults that would result from crevice corrosion, by strictly limiting the chemical components and CRI (crevice corrosion resistance index) value of the part. For this purpose, we have found that when the contents of main alloy components of stainless steel for use in making fluid handling parts, i.e., the Cr, Ni, Mo, Cu, N, W and V contents, are limited within restricted ranges so as to give a CRI value not lower than the lower limit, outstanding durability can be given to the material for use in the foregoing environment.

Described below are the requirements as to the composition of the alloy (stainless steel) for making the fluid handling parts of the invention and reasons for limiting the contents.

[C content: 0.001-0.01%]

Although C is generally detrimental to the corrosion resistance of stainless steels, presence of an amount of C is necessary from the viewpoint of strength. A very low C content of less than 0.001% entails an increased production cost, whereas when in excess of 0.01%, the C content results in greatly impaired corrosion resistance, hence 0.001% to up to 0.01%.

[Si content: up to 5%]

Si is an element effective for giving improved oxidation resistance to stainless steels. Presence of more than 5% of Si leads to seriously impaired hot workability. Accordingly, the Si content is limited to not higher than 5.0%.

[Mn content: up to 2%]

Mn is an element for stabilizing austenite, can be used as a substitute for expensive Ni, but is ineffective for giving corrosion resistance for use in salt water as contemplated by the present invention, if more than 2.0% of Mn is present. The upper limit for the Mn content not affecting corrosion resistance is 2.0%.

[P content: up to 0.03%]

Low P contents are desirable from the viewpoint of corrosion resistance and hot workability. In excess of 0.03%, seriously impaired hot workability will result. Accordingly, the P content should be up to 0.03%.

[S content: up to 100 ppm]

S is an element exerting a marked influence on hot workability as well as on corrosion resistance. The lower the content, the better. The S content is therefore up to 100 ppm (0.01%).

**EP 1 536 029 A1**

[O content: up to 50 ppm]

Like S, O is also an element exerting a marked influence on hot workability. The lower the content, the better. O is limited to not higher than 50 ppm which is a value available by the usual stainless steel making process.

[Cr content: at least 18% to not higher than 25%]

Cr is a basic component according to the present invention. This element is added in the presence of Ni, Mo, Cu and N. Presence of at least 18% of Cr is necessary to obtain satisfactory corrosion resistance. Although the corrosion resistance improves with an increase in the Cr content, amounts exceeding 25% present some difficulty in making the alloy and lead to an increased cost. The Cr content should therefore be limited to the range of at least 18% to not higher than 25%.

[Ni content: at least 15% to not higher than 25%]

Like Cr, Mo, Cu and N, Ni is also a basic component of the stainless steel of the invention. To facilitate the production of thick plates of stainless steel, it is required to give the steel a metal structure of austenitic phase and to add Ni. At least 15% of Ni should be present to give the steel of the invention an austenitic phase. The presence of an excess of Ni not only results in an increased cost but also difficulty in making the steel. To ensure a low cost and austenitic phase, the upper limit for the Ni content is 25%.

[Mo content: at least 4.5% to not higher than 7.0]

Like Cr, Ni, Cu and N, Mo is a basic component of the stainless steel of the invention. Mo is essential in obtaining high corrosion resistance in a saltwater environment. Mo content of 4.5% to 7.0% is effective in the presence of Cr and N. With less than 4.5% of Mo present, insufficient corrosion resistance will result, whereas in excess of 7.0%, the effect to give improved corrosion resistance levels off, and the production of the alloy encounters difficulty and requires a high cost.

[Cu content: at least 0.5% to not higher than 3.0%]

Cu is an essential element for giving high corrosion resistance in a saltwater environment when present conjointly with Cr, Ni, Mo and N. When at least 0.5% of Cu is present, a remarkable effect is available by the combination of these elements, whereas if more than 3.0% of Cu is present, the effect to increase the corrosion resistance levels off and lower hot workability will result. Accordingly, Cu content is limited to the range of 0.5% to 3.0%.

[N content: at least 0.1% to not higher than 0.3%]

N is used as a basic component in combination with Cr, Ni, Mo and Cu. N is a highly effective austenite forming element and at the same time, an element for inhibiting crevice corrosion of stainless steels. At least 0.1% of N must be present if stabilized corrosion resistance is to be obtained. Addition of more than 0.3% of N presents extreme difficulty in making the stainless steel and impairs the hot workability of the steel. The N content is therefore limited to the range of at least 0.1% to not higher than 0.3%.

[W content: up to 2%]

If W is added conjointly with Cr, Mo, N and V, a further stabilized passive film will be formed, giving improved crevice corrosion resistance to the stainless steel in seawater. Up to 2% of W is used in accordance with the environment because presence of more than 2% of W entails seriously impaired hot workability.

[V content: up to 2%]

If V is added conjointly with Cr, Mo, N and W, a further stabilized passive film will be formed, giving improved crevice corrosion resistance to the alloy in seawater. Up to 2% of V is used in accordance with the environment. The higher the V content, the higher the crevice corrosion resistance, whereas use of more than 2% of V seriously impairs the hot workability of the stainless steel, presenting difficulty in steel making and leading to an economical disadvantage. Accordingly, the V content is limited to 2% if highest.

7

[CRI value: at least 40 to not greater than 55]

When the CRI value calculated from the expression [Cr] + 4 × [Mo] + 30 × [N] is at least 40, the stainless steel is substantially free from crevice corrosion. CRI values over 55 result in a higher steel making cost, posing problems to the universal usefulness of the part or entailing an increased valve fabricating cost. For these reasons, the CRI value is limited to the range of at least 40 to not greater than 55 from the viewpoint of assuring high crevice corrosion resistance and a cost reduction.

In the foregoing first to fourth embodiments, the contact portions of the metal members 2, 3, 6, 22, 25, 26, 27, 31, 34, 35, 41, 43, 44 are surface-finished to a surface roughness of about 0.1 in Ra. This renders the contact portions less susceptible to crevice corrosion.

EXAMPLES

The present invention will be further described with reference to the following examples.

For a comparison, Table 1 shows the chemical compositions of fluid handling parts of the invention and comparative parts, the results obtained by passing natural seawater of normal temperature through the parts for about six months and thereafter checking the parts for crevice corrosion faults and the results of overall evaluation.

The blank materials for the flow handling parts were prepared by the electric furnace-AOD process or electric furnace-VAC process. The molten steels obtained were cast into continuous slabs under the usual conditions, followed by a soaking treatment at 1150° C to 1250° C for 0.5 to 1 hour. After a surface treatment, valves of the construction shown in FIGS. 2 and 3 were fabricated, subjected to a solution heat treatment and used for testing. The finished surfaces had a surface roughness of 0.1 in Ra.

The overall evaluation was conducted with reference to the results of the exposure test conducted in natural seawater and the CRI values according to the following criteria.

Mark ⓞ : valve fulfilling the two requirements of being free of any crevice corrosion fault and having a CRI value of at least 40 to not greater than 55.

Mark ✕: valve failing to fulfill one or both of the above requirements.

With reference to Table 1, the valves less than 35 in CRI value were all found to have developed crevice corrosion. The valve No. 5 with a CRI value of 42.93 was low in Ni, Mo and Cu contents. Although increased only in Cr content and having a greater CRI value, this valve shows that crevice corrosion can not be prevented by increasing the Cr content and CRI value only. No crevice corrosion occurred in any of the valves which were made from a material comprising 18 to 25% of Cr, 15 to 25% of Ni, 4.5 to 7.0% of Mo, 0.5 to 3.0% of Cu and 0.1 to 0.3% of N and having a CRI value of at least 40.

The results given in Table 1 reveal that the fluid handling parts of the invention have very high crevice corrosion resistance.

EP 1 536 029 A1

Table 1

| | Valve No. | Cr | Ni | Mo | Cu | N | W | V | Crevice corro-sion | CRI | Overall evalua-tion |
|---|---|---|---|---|---|---|---|---|---|---|---|
| Comp. Exam-ple | 1 | 18.08 | 8.23 | 0.14 | 0.21 | 0.002 | - | - | Occurred | 18.7 | ✕ |
| | 2 | 17.67 | 11.87 | 2.54 | 0.19 | 0.0018 | - | - | Occurred | 27.88 | ✕ |
| | 3 | 19.33 | 13.25 | 3.55 | 0.22 | 0.0015 | - | - | Occurred | 33.58 | ✕ |
| | 4 | 19.02 | 0.1 | 1.99 | 0.05 | 0.001 | - | 0.12 | Occurred | 27.01 | ✕ |
| | 5 | 25.03 | 7.03 | 3.05 | 0.01 | 0.19 | 0.55 | - | Occurred | 42.93 | ✕ |
| Inven-tion Exam-ple | 6 | 22.1 | 24.32 | 4.54 | 1.55 | 0.23 | - | - | No | 47.16 | ◎ |
| | 7 | 20.03 | 18.23 | 6.01 | 0.79 | 0.18 | - | - | No | 49.47 | ◎ |
| | 8 | 20.04 | 19.11 | 5.53 | 1.09 | 0.13 | - | 0.34 | No | 46.06 | ◎ |
| | 9 | 24.05 | 25.23 | 6.11 | 2.99 | 0.21 | 1.89 | 1.97 | No | 54.79 | ◎ |

As described above, the valve of the invention is usable with diminution of crevice corrosion faults due to chemicals and foods, and has durability for use over a prolonged period of time without replacement or repairs of corrosion faults. The present invention is therefore of immense value.

INDUSTRIAL APPLICABILITY

The fluid handling parts of the invention have high crevice corrosion resistance, and are usable as couplings in piping systems and as valves in fluid control apparatus and suitable especially for use in pharmaceutical or food manufacturing apparatus.

**Claims**

1.  A valve, coupling or like fluid handling part for use in piping and fluid control devices which is composed of a plurality of components, the plurality of components including a specified metal member having a contact surface to be brought into contact with one of the other components, the contact surface having an end exposed on an exterior of the fluid handling part, the fluid handling part being **characterized in that** the specified metal member is made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities, the alloy having a CRI (crevice corrosion resistance index) value in the range of $40 \leq CRI \leq 55$, as determined from the expression:

$$CRI = [Cr] + 4 \times [Mo] + 30 \times [N]$$

    wherein the amounts of alloy components present in combination in the alloy to ensure crevice corrosion resistance are expressed in % by weight.

2.  A fluid handling part according to claim 1 which is **characterized in that** the alloy further comprises up to 2% of W and/or up to 2% of V.

3.  A fluid handling part according to claim 1 or 2 which is a valve comprising a body, an actuator and a threaded member, at least one of the body, the actuator and the threaded member being the specified metal member.

4.  A fluid handling part according to claim 1 or 2 which is a diaphragm valve wherein a nonmetallic diaphragm is held between a metal body and a metal bonnet, each of the body and the bonnet being the specified metal member.

5.  A fluid handling part according to claim 1 or 2 which is a pipe coupling to be assembled by tightening up a cap nut as screwed on an externally threaded portion provided on an outer periphery of a tubular coupling member, at least one of the coupling member and the cap nut being the specified metal member.

# Fig. 1

EP 1 536 029 A1

Fig. 2

Fig. 3

# Fig. 4

# Fig. 5

# Fig. 6

<div style="text-align:center">

**INTERNATIONAL SEARCH REPORT**

</div>

| | International application No. |
|---|---|
| | PCT/JP03/08695 |

**A. CLASSIFICATION OF SUBJECT MATTER**
Int.Cl⁷ C22C38/00, C22C38/58, F16L19/08, F16K27/00

According to International Patent Classification (IPC) or to both national classification and IPC

**B. FIELDS SEARCHED**

Minimum documentation searched (classification system followed by classification symbols)
Int.Cl⁷ C22C38/00, C22C38/58, F16L19/08, F16K27/00

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2002-69590 A (NKK Corp.),<br>08 March, 2002 (08.03.02),<br>Full text<br>(Family: none) | 1,2<br>3-5 |
| Y | JP 2002-89724 A (Kitz Corp.),<br>27 March, 2002 (27.03.02),<br>Full text<br>(Family: none) | 3 |
| Y | JP 11-63253 A (Nippon Daiya Barubu Kabushiki Kaisha),<br>05 March, 1999 (05.03.99),<br>Full text<br>(Family: none) | 4 |

☒ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 31 October, 2003 (31.10.03) | 18 November, 2003 (18.11.03) |

| Name and mailing address of the ISA/<br>Japanese Patent Office | Authorized officer |
|---|---|
| Facsimile No. | Telephone No. |

Form PCT/ISA/210 (second sheet) (July 1998)

## INTERNATIONAL SEARCH REPORT

| International application No. |
|---|
| PCT/JP03/08695 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2000-257781 A  (Kubota Corp.),<br>19 September, 2000 (19.09.00),<br>Full text<br>(Family: none) | 5 |

Form PCT/ISA/210 (continuation of second sheet) (July 1998)